(19) Europäisches Patentamt
European Patent Office
Office européen des brevets

(11) **EP 3 346 027 A1**

(12) **EUROPEAN PATENT APPLICATION**

(43) Date of publication:
**11.07.2018 Bulletin 2018/28**

(21) Application number: **17206862.9**

(22) Date of filing: **13.12.2017**

(51) Int Cl.:
*C25B 11/03* (2006.01)       *B01D 53/32* (2006.01)
*C01B 3/50* (2006.01)        *C25B 1/02* (2006.01)
*H01M 8/0662* (2016.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **05.01.2017   JP 2017000599**

(71) Applicant: **Panasonic Intellectual Property
Management Co., Ltd.
Osaka-shi, Osaka 540-6207 (JP)**

(72) Inventors:
• YAKUMARU, Yuuichi
  Osaka-shi, Osaka 540-6207 (JP)
• UKAI, Kunihiro
  Osaka-shi, Osaka 540-6207 (JP)
• KANI, Yukimune
  Osaka-shi, Osaka 540-6207 (JP)

(74) Representative: **Grünecker Patent- und
Rechtsanwälte
PartG mbB
Leopoldstraße 4
80802 München (DE)**

(54) **ELECTROCHEMICAL HYDROGEN PUMP**

(57)      An electrochemical hydrogen pump includes an electrolyte membrane having a pair of primary surfaces; a cathode catalyst layer provided on one primary surface of the electrolyte membrane; an anode catalyst layer provided on the other primary surface of the electrolyte membrane; a cathode gas diffusion layer provided on the cathode catalyst layer; an anode gas diffusion layer provided on the anode catalyst layer; and a voltage application device applying a voltage between the cathode catalyst layer and the anode catalyst layer. The anode gas diffusion layer includes a laminate of metal sheets which are provided with vents, and among the metal sheets, the maximum diameter of vents provided in a first metal sheet adjacent to the anode catalyst layer is smaller than the maximum diameter of vents provided in a second metal sheet adjacent to the first metal sheet.

FIG. 1

## Description

BACKGROUND

1. Technical Field

The present disclosure relates to an electrochemical hydrogen pump.

2. Description of the Related Art

In recent years, in consideration of environmental issues, such as global warming, and energy issues, such as depletion of petroleum resources, as a clean alternative energy source instead of fossil fuels, attention has been paid on hydrogen. When hydrogen is combusted, water is only emitted, and carbon dioxide, nitrogen oxide, and the like, each of which causes global warming, are not emitted; hence, hydrogen is expected as clean energy. As a device using hydrogen as a fuel, for example, fuel cells may be mentioned, and for automobile power sources and household power generation, fuel cells have been increasingly developed and also have been spread. In addition, in a coming hydrogen society, besides a technique of manufacturing hydrogen, technical development in terms of storage of hydrogen at a high density, transportation of a small volume of hydrogen at a low cost, and usage thereof has been required. Furthermore, in order to promote the spread of fuel cells, infrastructure of fuel supply is also required to be organized. Accordingly, various proposals have been made for purification to obtain a high purity hydrogen gas and for pressure rising thereof.

For example, Japanese Patent No. 4733380 has disclosed that as shown in Fig. 12, a support member 30 for an electrolyte membrane of a high differential pressure electrochemical cell is used as a gas diffusion layer which is in contact with the electrolyte membrane. That is, in one surface of the support member 30, rectangular recess portions is formed, and in the other surface, rhombic recess portions is formed. In addition, an overlapping portion of the two types of recess portions forms a through-hole 31 through which a fluid passes. Accordingly, clogging of a fluid flow path which may occur in a related mesh type gas diffusion layer can be suppressed, and in addition, a rigidity can be secured which can withstand the difference in pressure between a high pressure side and a low pressure side of the electrochemical cell. Accordingly, since being supported by the support member 30, the electrolyte membrane can be suppressed from being deformed to a point of rupture.

In addition, Japanese Unexamined Patent Application Publication No. 2000-58073 has disclosed that as shown in Fig. 13, a laminate in which porous layers 41, 42, and 43 are laminated to each other is used as a gas diffusion layer of a fuel cell. The porous layers 41, 42, and 43 have opening portions 41 a, 42a, and 43a, respectively. In addition, those opening portions 41a, 42a, and 43a have different opening diameters from each other, and the opening diameters are gradually decreased from a collector 38 to a catalyst layer 36a. Accordingly, an output and an energy efficiency of the fuel cell can be improved.

SUMMARY

However, in Japanese Patent No. 4733380, the relationship between the size of the through-hole of the gas diffusion layer and the rupture of the electrolyte membrane in the case in which the electrolyte membrane is pressed above the through-hole of the gas diffusion layer by the difference in pressure between a high pressure side and a low pressure side of the electrochemical cell has not been sufficiently investigated. In addition, in Japanese Unexamined Patent Application Publication No. 2000-58073, since the gas diffusion layer of the fuel cell is the subject to be discussed, the problem of rupture of the electrolyte membrane which may occur when the electrolyte membrane is pressed above the opening portion of the gas diffusion layer has not been considered.

In consideration of the situation described above, one non-limiting and exemplary embodiment provides an electrochemical hydrogen pump which is able to reduce a probability in which an electrolyte membrane is ruptured when pressed to an anode gas diffusion layer by the difference in pressure between a cathode and an anode.

In one general aspect, the techniques disclosed here feature an electrochemical hydrogen pump comprising: an electrolyte membrane having a pair of primary surfaces; a cathode catalyst layer provided on one primary surface of the electrolyte membrane; an anode catalyst layer provided on the other primary surface of the electrolyte membrane; a cathode gas diffusion layer provided on the cathode catalyst layer; an anode gas diffusion layer provided on the anode catalyst layer; and a voltage application device applying a voltage between the cathode catalyst layer and the anode catalyst layer. In the electrochemical hydrogen pump described above, the anode gas diffusion layer includes a laminate formed of metal sheets which are provided with vents, and among the metal sheets, the maximum diameter of vents provided in a first metal sheet adjacent to the anode catalyst layer is smaller than the maximum diameter of vents provided in a second metal sheet adjacent to the first metal sheet.

The electrochemical hydrogen pump according to one aspect of the present disclosure has an effect capable of reducing the probability in which the electrolyte membrane pressed to the anode gas diffusion layer by the difference in pressure between the anode and the cathode is ruptured as compared to that in the past.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

BRIEF DESCRIPTION OF THE DRAWINGS

Fig. 1 is a cross-sectional view showing one example of an electrolyte membrane which is pressed above a vent of an anode gas diffusion layer by the difference in pressure between a cathode and an anode of an electrochemical hydrogen pump;

Fig. 2 is a view showing one example of an electrochemical hydrogen pump of a first embodiment;

Fig. 3 is a perspective view showing one example of an anode gas diffusion layer of the electrochemical hydrogen pump of the first embodiment;

Fig. 4A is a view showing one example of the anode gas diffusion layer of the electrochemical hydrogen pump of the first embodiment;

Fig. 4B is a view showing one example of the anode gas diffusion layer of the electrochemical hydrogen pump of the first embodiment;

Fig. 4C is a view showing one example of the anode gas diffusion layer of the electrochemical hydrogen pump of the first embodiment;

Fig. 5 is a view showing one example of the anode gas diffusion layer of the electrochemical hydrogen pump of the first embodiment;

Fig. 6A is a graph showing one example of number distributions of diameters of vents provided in a first metal sheet and a second metal sheet of the electrochemical hydrogen pump of the first embodiment;

Fig. 6B is a graph showing one example of number distributions of diameters of vents provided in the first metal sheet and the second metal sheet of the electrochemical hydrogen pump of the first embodiment;

Fig. 6C is a graph showing one example of number distributions of diameters of vents provided in the first metal sheet and the second metal sheet of the electrochemical hydrogen pump of the first embodiment;

Fig. 7A is a cross-sectional view showing one example of an anode gas diffusion layer of an electrochemical hydrogen pump of a second embodiment;

Fig. 7B is a cross-sectional view showing one example of the anode gas diffusion layer of the electrochemical hydrogen pump of the second embodiment;

Fig. 8A is a plan view showing one example of a metal sheet of a laminate of the anode gas diffusion layer;

Fig. 8B is a plan view showing one example of the metal sheet of the laminate of the anode gas diffusion layer;

Fig. 8C is a plan view showing one example of the metal sheet of the laminate of the anode gas diffusion layer;

Fig. 9 is a cross-sectional view showing one example of an anode gas diffusion layer of an electrochemical hydrogen pump of a first example of the second embodiment;

Fig. 10 is a cross-sectional view showing one example of an anode gas diffusion layer of an electrochemical hydrogen pump of a second example of the second embodiment;

Fig. 11 is a cross-sectional view showing one example of an anode gas diffusion layer of an electrochemical hydrogen pump of a modified example of the second embodiment;

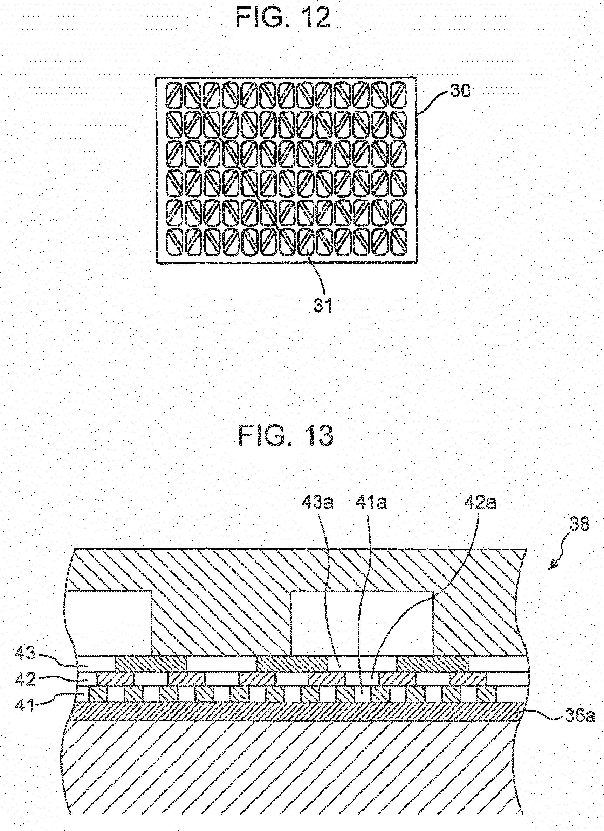

Fig. 12 is a view showing one example of a related gas diffusion layer; and

Fig. 13 is a view showing one example of a related gas diffusion layer.

DETAILED DESCRIPTION

In the case in which an electrolyte membrane is pressed above a vent of an anode gas diffusion layer by the difference in pressure between an anode and a cathode of an electrochemical hydrogen pump, an intensive research has been made on the relationship between rupture of the electrolyte membrane and the size of the vent, and as a result, the following finding was obtained.

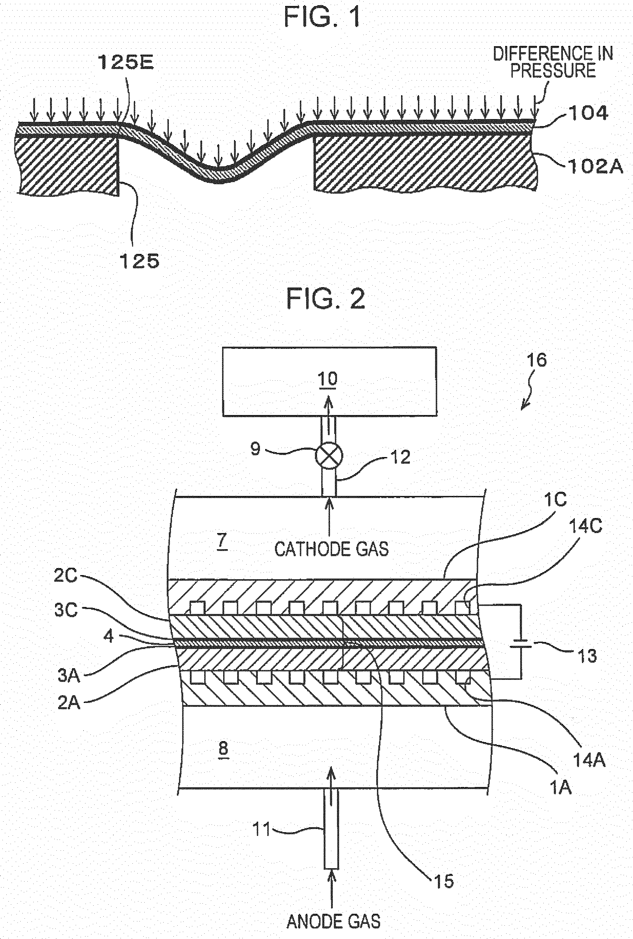

For example, as shown in Fig. 1, by the difference in pressure described above, when an electrolyte membrane 104 is pressed above a vent 125 of an anode gas diffusion layer 102a, the flexible electrolyte membrane 104 concavely sags into the vent 125 of the anode gas diffusion layer 102a. Accordingly, since the electrolyte membrane 104 is bent at an edge portion 125E of the vent 125, for example, a crack is generated in the electrolyte membrane 104 at this edge portion 125E, so that the electrolyte membrane 104 may be ruptured in some cases.

In this case, as the vent 125 s more finely formed, even when the electrolyte membrane 104 is pressed above the vent 125, a sag amount of the electrolyte membrane 104 into the vent 125 can be reduced, and as a result, the electrolyte membrane 104 is not likely to be ruptured.

Hence, an electrochemical hydrogen pump of a first aspect of the present disclosure includes an electrolyte membrane having a pair of primary surfaces; a cathode catalyst layer provided on one primary surface of the electrolyte membrane; an anode catalyst layer provided on the other primary surface of the electrolyte membrane; a cathode gas diffusion layer provided on the cathode catalyst layer; an anode gas diffusion layer provided on the anode catalyst layer; and a voltage application device applying a voltage between the cathode catalyst layer and the anode catalyst layer. In the electrochemical hydrogen pump described above, the anode gas diffusion layer includes a laminate formed of metal sheets which are provided with vents, and among the metal sheets, the maximum diameter of vents provided in a first metal sheet adjacent to the anode catalyst layer is smaller than the maximum diameter of vents provided in a second metal sheet adjacent to the first metal sheet.

In addition, an electrochemical hydrogen pump of a second aspect of the present disclosure includes an electrolyte membrane having a pair of primary surfaces; a cathode catalyst layer provided on one primary surface of the electrolyte membrane; an anode catalyst layer provided on the other primary surface of the electrolyte membrane; a cathode gas diffusion layer provided on the cathode catalyst layer; an anode gas diffusion layer provided on the anode catalyst layer; and a voltage application device applying a voltage between the cathode catalyst layer and the anode catalyst layer. In the electrochemical hydrogen pump described above, the anode gas diffusion layer includes a laminate formed of metal sheets which are provided with vents, and among the metal sheets, the average diameter of vents provided in a first metal sheet adjacent to the anode catalyst layer is smaller than the average diameter of vents provided in a second metal sheet adjacent to the first metal sheet.

According to the structure as described above, in the electrochemical hydrogen pumps of the first and the second aspects described above, a probability in which the electrolyte membrane pressed to the anode gas diffusion layer by the difference in pressure between the anode and the cathode can be reduced as compared to that in the past.

In particular, since the maximum diameter of the vents of the first metal sheet is smaller than the maximum diameter of the vents of the second metal sheet, compared to the case in which the relationship between the first and the second metal sheets is opposite to that described above, the sag of the electrolyte membrane into the vent of the first metal sheet can be suppressed.

In addition, since the average diameter of the vents of the first metal sheet is smaller than the average diameter of the vents of the second metal sheet, compared to the case in which the relationship between the first and the second metal sheets is opposite to that described above, the sag of the electrolyte membrane into the vent of the first metal sheet can be suppressed.

Accordingly, even when the electrolyte membrane is pressed above the vent of the first metal sheet by the difference in pressure between the cathode and the anode of the electrochemical hydrogen pump, since suppressed from being bent at the edge portion of this vent, the electrolyte membrane is not likely to be ruptured.

According to an electrochemical hydrogen pump of a third aspect of the present disclosure, in the electrochemical hydrogen pump of the first aspect, of the anode gas diffusion layer and the cathode gas diffusion layer, the anode gas diffusion layer only includes the laminate formed of metal sheets which are provided with vents, and among the metal sheets, the maximum diameter of the vents provided in the first metal sheet adjacent to the anode catalyst layer may be smaller than the maximum diameter of the vents provided in the second metal sheet adjacent to the first metal sheet.

According to the structure as described above, in the electrochemical hydrogen pump of the third aspect described above, since the anode gas diffusion layer is the laminate formed of metal sheets, a compression strain amount by the press can be reduced. In addition, a material having a high elasticity as compared to that of the anode gas diffusion layer can be selected for the cathode gas diffusion layer, so that the followability to the deformation of the electrolyte membrane is improved. That is, an increase in contact resistance between the cathode gas diffusion layer and the cathode catalyst layer can be suppressed. In addition, since the maximum diameter of the vents of the first metal sheet is smaller than the maximum diameter of the vents of the second metal sheet, the probability in which the electrolyte membrane is ruptured can be reduced as compared to that in the past.

According to an electrochemical hydrogen pump of a fourth aspect of the present disclosure, in the electrochemical hydrogen pump of the second aspect, of the anode gas diffusion layer and the cathode gas diffusion layer, the anode gas diffusion layer only includes the laminate formed of metal sheets which are provided with vents, and among the metal sheets, the average diameter of the vents provided in the first metal sheet adjacent to the anode catalyst layer may be smaller than the average diameter of the vents provided in the second metal sheet adjacent to the first metal sheet.

According to the structure as described above, in the electrochemical hydrogen pump of the fourth aspect described above, since the anode gas diffusion layer is the laminate formed of metal sheets, a compression strain amount by the press can be reduced. In addition, a material having a high elasticity as compared to that of the anode gas diffusion layer may be selected for the cathode gas diffusion layer, so that the followability to the deformation of the electrolyte membrane is improved. That is, an increase in contact resistance between the cathode gas diffusion layer and the cathode catalyst layer can be suppressed. In addition, since the maximum diameter of the vents of the first metal sheet is smaller than the maximum diameter of the vents of the second metal sheet, the probability in which the electrolyte membrane is ruptured can be reduced as compared to that in the past.

According to an electrochemical hydrogen pump of a fifth aspect of the present disclosure, in the electrochemical hydrogen pump of one of the first to the fourth aspects, the number of the vents per unit surface area of a primary surface of the first metal sheet may be larger than the number of the vents per unit surface area of a primary surface of the second metal sheet.

Even when the size of the vent of the first metal sheet adjacent to the anode catalyst layer is smaller than the size of the vent of the second metal sheet, if the number of the vents per unit surface area of the primary surface of the first metal sheet is set larger than the number of the vents per unit surface area of the primary surface of the second metal sheet, a gas diffusivity of the first metal sheet can be improved.

According to an electrochemical hydrogen pump of a sixth aspect of the present disclosure, in the electrochemical hydrogen pump of one of the first to the fifth aspects, an open area of the vents of the first metal sheet may be equivalent to or more than an open area of the vents of the second metal sheet.

Even when the size of the vent of the first metal sheet adjacent to the anode catalyst layer is smaller than the size of the vent of the second metal sheet, if the open area of the vents (total open area of all the vents) of the first metal sheet is set equivalent to or more than the open area of the vents (total open area of all the vents) of the second metal sheet, the gas diffusivity of the first metal sheet can be improved.

According to an electrochemical hydrogen pump of a seventh aspect of the present disclosure, in the electrochemical hydrogen pump of one of the first to the sixth aspects, the first metal sheet may have a hardness lower than that of the second metal sheet.

As the hardness of the metal sheet is increased, and as the diameter of the vent of the metal sheet is decreased, the processability of the vent of the metal sheet becomes difficult. Hence, in the electrochemical hydrogen pump of this aspect, since the hardness of the first metal sheet is set lower than the hardness of the second metal sheet, fine processing of the vents of the first metal sheet can be easily performed. In addition, since the hardness of the second metal sheet is set higher than the hardness of the first metal sheet, the rigidity of the second metal sheet can be increased.

According to an electrochemical hydrogen pump of an eighth aspect of the present disclosure, in the electrochemical hydrogen pump of one of the first to the seventh aspects, one of a pair of primary surfaces of the second metal sheet which is adjacent to the first metal sheet has a roughness higher than the roughness of one of a pair of primary surfaces of the first metal sheet which is adjacent to the anode catalyst layer. In addition, according to an electrochemical hydrogen pump of a ninth aspect of the present disclosure, in the electrochemical hydrogen pump of one of the first to the eighth aspects, one of a pair of primary surfaces of the first metal sheet which is adjacent to the second metal sheet has a roughness higher than the roughness of one of a pair of primary surfaces of the first metal sheet which is adjacent to the anode catalyst layer. Here, the surface roughness conforms to JIS B0601:2001.

According to the structure as described above, at least one of the primary surface of the first metal sheet adjacent to the second metal sheet and the primary surface of the second metal sheet adjacent to the first metal sheet is formed to have appropriate irregularities, so that an anode gas is allowed to diffuse between those primary surfaces. Accordingly, compared to the case in which the irregularities as described above are not formed, the gas diffusivity of the first metal sheet is improved.

In addition, according to an electrochemical hydrogen pump of a tenth aspect of the present disclosure, in the electrochemical hydrogen pump of one of the first to the ninth aspects, at least one metal sheet among the metal sheets may have a communication path communicating between through-holes.

According to the structure as described above, the electrochemical hydrogen pump of this aspect can allow an anode gas to uniformly diffuse as compared to that in the past. That is, since the metal sheet of the laminate of the anode gas diffusion layer has a communication path, an anode gas passing through the anode gas diffusion layer from an appropriate flow path member can be supplied not only in one direction but also in an arbitrary direction. Hence, when metal sheets having different arrangement patterns of the communication paths are laminated to each other, the direction of an anode gas flow in the anode gas diffusion layer can be arbitrarily determined. Accordingly, the gas diffusivity of the anode gas diffusion layer is improved.

In addition, for example, when the structure is formed so that the anode gas is supplied into the through-holes of the laminate of the anode gas diffusion layer through a gas flow path of an appropriate flow path member, if this laminate has not the communication path described above, the anode gas is not allowed to flow into a through-hole of the laminate of the anode gas diffusion layer located above a vertical line to a portion at which no gas flow path of the flow path member is provided, and the gas diffusion in the anode gas diffusion layer may be non-uniformed in some cases. However, in the anode gas diffusion layer of the electrochemical hydrogen pump of this aspect, through the communication path described above, the anode gas can be allowed to flow into the through-hole of the laminate of the anode gas diffusion layer as described above, and hence the gas diffusion in the anode gas diffusion layer can be suppressed from being non-uniformed.

In addition, according to an electrochemical hydrogen pump of an eleventh aspect of the present disclosure, in the electrochemical hydrogen pump of the tenth aspect, the communication path described above may communicate between through-holes provided in the same metal sheet adjacent to the metal sheet in which the communication path is provided.

In addition, according to an electrochemical hydrogen pump of a twelfth aspect of the present disclosure, in the electrochemical hydrogen pump of the tenth or the eleventh aspect, the communication path described above may communicate between through-holes of different metal sheets each adjacent to the metal sheet in which the communication path is provided.

Since the laminate of the anode gas diffusion layer includes the communication path described above, an anode gas passing through the laminate can be supplied not only in a direction penetrating the laminate but also in a direction parallel to a primary surface of the laminate. Hence, the gas diffusivity of the anode gas diffusion layer is improved.

In addition, according to an electrochemical hydrogen pump of a thirteenth aspect of the present disclosure, in the electrochemical hydrogen pump of one of the first to the twelfth aspects, the laminate of the anode gas diffusion layer may include a metal sheet formed of a metal sintered body through which a gas is allowed to diffuse.

According to the structure as described above, in the electrochemical hydrogen pump of this aspect, since the laminate of the anode gas diffusion layer includes a metal sheet formed of a metal sintered body, compared to the case in which without using a metal sheet formed of a metal sintered body, the laminate is formed of metal steel sheets which are provided with vents, gas permeability and gas diffusivity required for the anode gas diffusion layer can be easily secured.

According to an electrochemical hydrogen pump of a fourteenth aspect of the present disclosure, in the electrochemical hydrogen pump of one of the first to the thirteenth aspects, the first metal sheet may be formed of a metal sintered body, and the second metal sheet may be a laminate formed of metal steel sheets which are provided with vents.

According to the structure as described above, since the metal sintered body has a surface roughness higher than the surface roughness of the metal steel sheet, an area at which the first metal sheet is in contact with the anode catalyst layer can be further increased, and the diffusivity of the anode gas can be improved.

According to an electrochemical hydrogen pump of a fifteenth aspect of the present disclosure, in the electrochemical hydrogen pump of one of the first to the fourteenth aspects, the cathode gas diffusion layer may include a third metal sheet which is provided with vents, and the distribution of average diameters of the vents of the third metal sheet may be wider than the distribution of average diameters of the vents of the first metal sheet.

According to the structure as described above, since non-uniformity of stress generated when the third metal sheet is in contact with the cathode catalyst layer can be reduced, an increase in reaction overvoltage of an electrochemical reaction can be suppressed.

According to an electrochemical hydrogen pump of a sixteenth aspect of the present disclosure, in the electrochemical hydrogen pump of the fifteenth aspect, the first metal sheet may be formed of a metal powder sintered body, and the third metal sheet may be formed of a metal fiber sintered body.

According to the structure as described above, while the non-uniformity of stress generated when the third metal sheet is in contact with the cathode catalyst layer is reduced, since a compression strain amount to the press force can be reduced by the first metal sheet having a high rigidity as compared to that of the third metal sheet, an increase in reaction overvoltage of an electrochemical reaction can be suppressed.

According to an electrochemical hydrogen pump of a seventeenth aspect of the present disclosure, in one of the first to the sixteenth aspects, the first metal sheet may be formed of a metal mesh, and the second metal sheet may be a laminate formed of metal steel sheets which are provided with vents.

Compared to the case in which vents is provided in a metal steel sheet, by the use of a metal mesh, the size of the vent can be easily decreased, and the porosity thereof can also be easily increased. Hence, by the structure as described above, the probability in which a pressed electrolyte membrane is ruptured is not only reduced, but also the area at which the first metal sheet is in contact with the anode catalyst layer can be increase, so that the gas diffusivity can also be improved.

Hereinafter, with reference to the accompanying drawings, concrete examples of the above aspects of the present disclosure will be described. The following concrete examples each show one example of the above aspect. Hence, as long as the following shapes, materials, constituent elements, arrangement positions of the constituent elements, connection modes thereof, and the like are not described in the claims, the above aspects are not limited thereto. In addition, among the following constituent elements, a constituent element not described in the independent claim showing a topmost concept of the aspect will be described as an arbitrary constituent element. In addition, in the drawings, description of an element designated by the same reference numeral may be omitted in some cases. In addition, in order to facilitate the understanding of the drawings, the constituent elements are schematically drawn, and hence, the shape, the dimensional ratio, and the like may be not accurate in some cases.

(FIRST EMBODIMENT)

[DEVICE STRUCTURE]

Fig. 2 is a view showing one example of an electrochemical hydrogen pump of a first embodiment.
An electrochemical hydrogen pump 16 includes a membrane electrode assembly 15 (hereinafter, referred to as the "MEA 15"), a first plate 1A, a second plate 1C, and a voltage application device 13. The MEA 15 includes an electrolyte membrane 4, a cathode catalyst layer 3C, an anode catalyst layer 3A, a cathode gas diffusion layer 2C, and an anode gas diffusion layer 2A, and those layers are bonded to each other in a laminated state.
The electrolyte membrane 4 has a pair of primary surfaces. In addition, the electrolyte membrane 4 is a proton conductive high molecular weight membrane capable of permeating a proton ($H^+$). As long as the electrolyte membrane 4 is a proton conductive membrane, any membrane may be used. For example, as the electrolyte membrane 4, a fluorine-based high molecular weight electrolyte membrane may be mentioned. In particular, as the electrolyte membrane 4, for example, Nafion (registered trade name, manufactured by Dupont) or Aciplex (trade name, manufactured by Asahi Kasei Corp.) may be used.
The cathode catalyst layer 3C is provided on one primary surface of the electrolyte membrane 4. Although the cathode catalyst layer 3C contains, for example, platinum as a catalyst metal, the catalyst metal is not limited thereto.
The anode catalyst layer 3A is provided on the other primary surface of the electrolyte membrane 4. Although the anode catalyst layer 3A contains, for example, RuIrFeOx as a catalyst metal, the catalyst metal is not limited thereto.
In addition, as a method for preparing a catalyst for the cathode catalyst layer 3C and the anode catalyst layer 3A, various methods may be mentioned, and hence the method is not particularly limited. For example, as a carrier of the catalyst, for example, an electrically conductive porous material powder or a carbon-based powder may be mentioned. As the carbon-based powder, for example, a powder of graphite, carbon black, active carbon having an electrical conductivity, or the like may be mentioned. A method for supporting platinum or another catalyst metal on a carrier, such as carbon, is not particularly limited. For example, a method, such as powder mixing or liquid phase mixing, may be used. As the latter liquid phase mixing, for example, a method in which a carrier, such as carbon, is dispersed in a catalyst component colloid liquid so that a catalyst component is adsorbed on the carrier may be mentioned. In addition, if needed, by using an active oxygen removing material as a carrier, platinum or another catalyst metal may be supported thereon by a method similar to that described above. A supporting state of platinum or another catalyst metal on a carrier is not particularly limited. For example, a catalyst metal may be formed into fine particles and then supported on a carrier in a highly dispersed state.
The cathode gas diffusion layer 2C is provided on the cathode catalyst layer 3C. As the cathode gas diffusion layer 2C, for example, a paper-like layer may be used which is formed of highly elastic graphitized carbon fibers or a porous body prepared by performing platinum plating on the surface of a titanium powder sintered body. In addition, when the former graphitized carbon fibers are used, for example, by a heat treatment performed at 2,000°C or more, graphite crystals are grown, and carbon fibers are changed into graphite fibers.
The anode gas diffusion layer 2A is provided on the anode catalyst layer 3A. The anode gas diffusion layer 2A is required to have a rigidity so as to withstand the press of the electrolyte membrane 4 by the difference in pressure between the cathode and the anode of the electrochemical hydrogen pump 16. As long as the anode gas diffusion layer 2A has a rigidity to withstand the press of the electrolyte membrane 4 by the difference in pressure described above, any structure may be used. A particular structure of the anode gas diffusion layer 2A will be described later.
The first plate 1A (separator plate) is provided with a gas flow path 14A through which an anode gas flows. That is, the first plate 1A is a member to supply the anode gas to the anode gas diffusion layer 2A. In particular, in a plan view of the first plate 1A, for example, a serpentine-shaped gas flow path 14A communicating with a manifold not shown in the figure is formed, and a formation region of this gas flow path 14A is arranged so as to be in contact with a primary surface of the anode gas diffusion layer 2A.
In addition, when the electrolyte membrane 4 is dried, a membrane resistance (IR loss) and a reaction resistance (reaction overvoltage) generated when hydrogen is dissociated into a proton and an electron are not only increased, but also the electrolyte membrane 4 is liable to be ruptured; hence, the anode gas contains at least a hydrogen gas and water molecules (moisture). As the anode gas, for example, a reformed gas containing hydrogen or a hydrogen-containing gas produced by a water electrolysis method may be mentioned.
The second plate 1C (separator plate) is provided with a gas flow path 14C through which a cathode gas flows. That is, through the gas flow path 14C of the second plate 1C, the cathode gas from the cathode gas diffusion layer 2C flows. In particular, in a plan view of the second plate 1C, for example, a serpentine-shaped gas flow path 14C communicating with a manifold not shown in the figure is formed, and a formation region of this gas flow path 14C is arranged so as to be in contact with a primary surface of the cathode gas diffusion layer 2C. As the cathode gas, for example, a highly pure hydrogen gas may be mentioned.
In addition, the MEA 15 is sandwiched at the bottom and the top surfaces thereof by the first plate 1A and the second plate 1C, respectively, so that a single cell of the electrochemical hydrogen pump 16 is formed.

The voltage application device 13 applies a voltage between the cathode catalyst layer 3C and the anode catalyst layer 3A. In particular, a high potential terminal of the voltage application device 13 is connected to the electrically conductive first plate 1A, and a low potential terminal of the voltage application device 13 is connected to the electrically conductive second plate 1C. As long as the voltage application device 13 can apply a voltage between the cathode catalyst layer 3C and the anode catalyst layer 3A, any structure may be used. The voltage application device 13 may be able to adjust an application voltage. In this case, when being connected to a direct current power source, such as a battery, a solar cell, or a fuel cell, the voltage application device 13 includes a DC/DC converter, and when being connected to an alternating current power source, such as a commercial power source, the voltage application device 13 includes an AC/DC converter.

In this case, the cathode gas diffusion layer 2C and the anode gas diffusion layer 2A are electricity feeding bodies of the cathode and the anode, respectively, of the MEA 15. That is, the cathode gas diffusion layer 2C functions to feed electricity between the second plate 1C and the cathode catalyst layer 3C, and the anode gas diffusion layer 2A functions to feed electricity between the first plate 1A and the anode catalyst layer 3A.

In addition, the cathode gas diffusion layer 2C also functions to allow a gas to diffuse between the gas flow path 14C of the second plate 1C and the cathode catalyst layer 3C, and the anode gas diffusion layer 2A also function to allow a gas to diffuse between the gas flow path 14A of the first plate 1A and the anode catalyst layer 3A. For example, the anode gas flowing through the gas flow path 14A of the first plate 1 A diffuses to the surface of the anode catalyst layer 3A through the anode gas diffusion layer 2A.

In addition, if necessary, a cooling device is provided for the single cell of the electrochemical hydrogen pump 16, and by laminating at least two cells, a stack structure may be formed from single cells.

As shown in Fig. 2, the electrochemical hydrogen pump 16 includes an anode chamber 8 and a cathode chamber 7.

The inside of the anode chamber 8 communicates with an anode inlet pipe 11 and also communicates with the gas flow path 14A of the first plate 1A through a fluid flow path not shown (such as a pipe or a manifold). Accordingly, the anode gas flowing into the anode chamber 8 through the anode inlet pipe 11 is supplied to the gas flow path 14A of the first plate 1A.

The inside of the cathode chamber 7 communicates with a cathode outlet pipe 12 and also communicates with the gas flow path 14C of the second plate 1C through a fluid flow path not shown (such as a pipe or a manifold). Accordingly, after flowing into the cathode chamber 7 through the gas flow path 14C of the second plate 1C, the cathode gas (hydrogen gas) passing through the MEA 15 is then supplied to the cathode outlet pipe 12. In addition, an on-off valve 9 (such as an electromagnetic valve) is provided for the cathode outlet pipe 12, and since the on-off valve 9 is appropriately opened or closed, the cathode gas is stored in a high pressure hydrogen tank 10. Accordingly, the cathode gas as described above is used, for example, as a fuel of a hydrogen-using apparatus (such as a fuel cell) not shown.

[STRUCTURE OF ANODE GAS DIFFUSION LAYER]

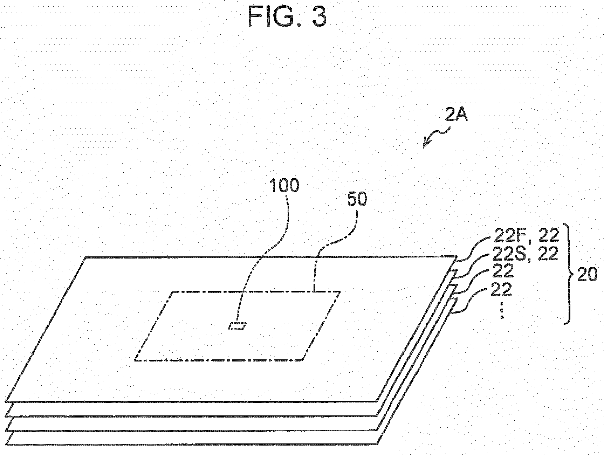

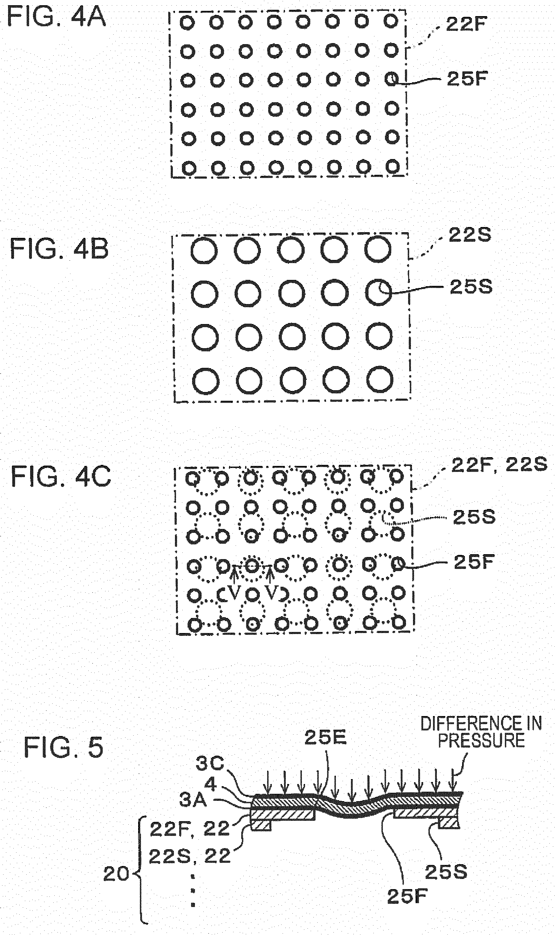

Figs. 3, 4A, 4B, 4C, and 5 are views each showing one example of the anode gas diffusion layer of the electrochemical hydrogen pump of the first embodiment. Fig. 4A is a plan view of a first metal sheet 22F in a region 100 which is a part of a gas diffusion portion 50 of the anode gas diffusion layer 2A. Fig. 4B is a plan view of a second metal sheet 22S in this region 100. Fig. 4C is a plan view of the first metal sheet 22F laminated on the second metal sheet 22S. Fig. 5 shows a cross-sectional view taken along the line V-V of Fig. 4C together with the electrolyte membrane 4.

As shown in Fig. 3, the anode gas diffusion layer 2A includes a laminate 20 of metal sheets 22 which are provided with vents (not shown in Fig. 3). In addition, in Fig. 3, although the metal sheets 22 separated from each other are shown, the metal sheets 22 are actually laminated to each other. In addition, for example, the metal sheets may be integrally bonded to each other, for example, by welding, adhesion, or brazing. In this case, primary surfaces of the metal sheets 22 in a laminated state may be surface-bonded to each other by diffusion bonding or the like.

The metal sheet 22 is formed so that an area other than the vents has no gas permeability. For example, although the metal sheet 22 may be a metal steel sheet having a thickness of approximately several tens to several hundreds of micrometers (such as approximately 100 $\mu$m), the metal sheet 22 is not limited thereto. This metal sheet 22 may be manufactured, for example, by casting or rolling of a metal. Since a metal casting method and a metal rolling method have been known, particular description thereof will be omitted.

As shown in Figs. 4A and 5, in the first metal sheet 22F adjacent to the anode catalyst layer 3A, for example, vents 25F may be formed in a matrix form (lattice shape) in a longitudinal and a lateral direction at regular intervals. The vent 25F may have an arbitrary shape. The vent 25F may be, for example, as shown in Fig. 4A, a round hole having a diameter of approximately several tens of micrometers, or although not shown in the figure, the vent 25F may be an oval-shaped hole having a minor axis of approximately several tens of micrometers. A material of the first metal sheet 22F will be described in examples.

As shown in Figs. 4B and 5, in the second metal sheet 22S adjacent to the first metal sheet 22F, for example, vents 25S may be formed in a matrix form (lattice shape) in a longitudinal and a lateral direction at regular intervals. The vent 25S may have an arbitrary shape. The vent 25S may be, for example, as shown in Fig. 4B, a round hole having a diameter of approximately several tens of micrometers, or although not shown in the figure, the vent 25S may have an oval-shaped hole having a minor axis of approximately several tens of micrometers. A material of the second metal sheet 22S will be described in examples.

In this case, in the electrochemical hydrogen pump 16 of this embodiment, among the metal sheets 22, the maximum diameter of the vents 25F provided in the first metal sheet 22F adjacent to the anode catalyst layer 3A is smaller than the maximum diameter of the vents 25S provided in the second metal sheet 22S adjacent to the first metal sheet 22F.

In addition, for example, when the vent is a round hole, the "maximum diameter of the vents" indicates the maximum value among the diameters of the round holes.

For example, when the vent is an oval-shaped hole, the "maximum diameter of the vents" indicates the maximum value among the major axes of the oval-shaped holes. The reason for this is that when the electrolyte membrane 4 is pressed above an oval-shaped hole, the sag amount of the electrolyte membrane 4 is dominantly determined by the major axis length of the oval-shaped hole.

In addition, in the electrochemical hydrogen pump 16 of this embodiment, among the metal sheets 22, the average diameter of the vents 25F provided in the first metal sheet 22F adjacent to the anode catalyst layer 3A is smaller than the average diameter of the vents 25S provided in the second metal sheet 22S adjacent to the first metal sheet 22F.

In addition, for example, when the vent is a round hole, the "average diameter of the vents" indicates the value obtained by dividing the total of the diameters of the round holes by the number of the round holes.

For example, when the vent is an oval-shaped hole, the "average diameter of the vents" indicates the value obtained by dividing the total of the major axis lengths of the oval-shaped holes by the number of the oval-shaped holes. The reason for this is that when the electrolyte membrane 4 is pressed above an oval-shaped hole, the sag amount of the electrolyte membrane 4 is dominantly determined by the major axis length of the oval-shaped hole.

In addition, as shown in Figs. 4A and 4B, the number of the vents 25F per unit area of a primary surface of the first metal sheet 22F is larger than the number of the vents 25S per unit area of a primary surface of the second metal sheet 22S. By the structure as described above, even when the size of the vent 25F of the first metal sheet 22F adjacent to the anode catalyst layer 3A is smaller than the size of the vent 25S of the second metal sheet 22S, the gas diffusivity of the first metal sheet 22F can be improved.

In addition, an open area of the vents 25F of the first metal sheet 22F is equivalent to or more than an open area of the vents 25S of the second metal sheet 22S. By the structure as described above, even when the size of the vent 25F of the first metal sheet 22F adjacent to the anode catalyst layer 3A is smaller than the size of the vent 25S of the second metal sheet 22S, the gas diffusivity of the first metal sheet 22F can be improved.

In addition, the "open area of the vents 25F of the first metal sheet 22F" and the "open area of the vents 25S of the second metal sheet 22S" represent the total open area of all the vents 25F and the total open area of all the vents 25S, respectively.

In the electrochemical hydrogen pump 16 of this embodiment, when the first metal sheet 22F and the second metal sheet 22S are laminated to each other, as shown in Fig. 4C, the vents 25F of the first metal sheet 22F and the vents 25S of the second metal sheet 22S are arranged so that the openings of the vents 25S are overlapped with some openings of the vents 25F.

Accordingly, the portions at which the vents 25F of the first metal sheet 22F are overlapped with the vents 25S of the second metal sheet 22S are each formed as a ventilation space between the first metal sheet 22F and the second metal sheet 22S in a plan view.

In addition, the shapes, the arrangements, the dimensions, and the like of the vents 25F of the first metal sheet 22F and the vents 25S of the second metal sheet 22S are shown by way of example and are not limited to those described in this example.

[Operation]

Hereinafter, an operation of the electrochemical hydrogen pump of the embodiment will be described with reference to the drawings. In addition, the following operation may be partially or fully performed by a control program of a controller not shown in the figure. Any controller may be used as long as having a control function. The controller includes, for example, a computing circuit and a storage circuit storing a control program. As the computing circuit, for example, an MPU and/or a CPU may be mentioned. As the storage circuit, for example, a memory may be mentioned. The controller may be formed of a single controller performing a centralized control or may be formed of controllers performing a decentralized control in cooperation with each other.

First, by the voltage application device 13, a voltage is applied between the anode and the cathode of the MEA 15.

Next, when the anode gas is supplied into the anode chamber 8 through the anode inlet pipe 11, electrons are dissociated from hydrogen in the anode gas on the anode, so that protons ($H^+$) are generated (Formula (1)). The electrons thus dissociated are transferred to the cathode through the voltage application device 13.

On the other hand, protons pass through the electrolyte membrane 4 together with water molecules and are brought into contact with the cathode. On the cathode, a reduction reaction is performed by the protons passing through the electrolyte membrane 4 and electrons from the cathode gas diffusion layer 2C, so that the cathode gas (hydrogen gas) is generated (Formula (2)).

Accordingly, gas purification of an anode gas containing impurities, such as a $CO_2$ gas, can be performed at a high efficiency. That is, the impurities, such as a $CO_2$ gas, are removed by the MEA 15. In addition, the anode gas may contain a CO gas as an impurity in some cases, In this case, since a CO gas degrades the catalyst activity of the anode catalyst layer 3A and the like, a CO gas is desirably removed by a CO remover (such as a modifier or a CO selective oxidizer) not shown in the figure.

In addition, when the on-off valve 9 is closed, the pressure of the cathode gas in the cathode chamber 7 is increased, and the gas pressure of the cathode becomes high. In particular, the relationship among a gas pressure P1 of the anode, a gas pressure P2 of the cathode, and a voltage E of the voltage application device 13 can be represented by the following formula (3).

$$\text{Anode: } H_2 \text{ (low pressure)} \rightarrow 2H^+ + 2e^- \qquad (1)$$

$$\text{Cathode: } 2H^+ + 2e^- \rightarrow H_2 \text{ (high pressure)} \qquad (2)$$

$$E = (RT/2F)\ln(P2/P1) + ir \qquad (3)$$

In the formula (3), R represents the gas constant ($8.3145 \text{J/K·mol}$), T represents a temperature (K) of the MEA 15, F represents Faraday's constant ($96,485 \text{ C/mol}$), P2 represents the gas pressure of the cathode, P1 represents the gas pressure of the anode, i represents the current density ($A/cm^2$), and r represents a cell resistance ($\Omega \cdot cm^2$).

From the formula (3), it is easily understood that by an increase in voltage E of the voltage application device 13, the gas pressure P2 of the cathode can be increased.

Accordingly, in the electrochemical hydrogen pump 16 of this embodiment, when the on-off valve 9 is closed, and the voltage E of the voltage application device 13 is increased, the cathode gas pressure in the cathode chamber 7 is increased. In addition, when the cathode gas pressure reaches a predetermined pressure or more, the on-off valve 9 is opened, so that the cathode gas in the cathode chamber 7 is filled in the high pressure hydrogen tank 10 through the cathode outlet pipe 12. On the other hand, when the cathode gas pressure in the cathode chamber 7 reaches less than the predetermined pressure, the on-off valve 9 is closed, so that the cathode chamber 7 and the high pressure hydrogen tank 10 are disconnected to each other. Hence, the cathode gas in the high pressure hydrogen tank 10 is suppressed from flowing back to the cathode chamber 7.

As described above, by the electrochemical hydrogen pump 16, the cathode gas (hydrogen gas) is pressurized to a desired target pressure and is filled in the high pressure hydrogen tank 10.

In addition, in the case described above, the difference in pressure between the cathode and the anode of the electrochemical hydrogen pump 16 is generated, and by this difference in pressure, the electrolyte membrane 4 is pressed to the anode gas diffusion layer 2A; however, in the electrochemical hydrogen pump 16 of this embodiment, the probability in which the electrolyte membrane 4 pressed to the anode gas diffusion layer 2A by the difference in pressure described above is ruptured can be reduced as compared to that in the past.

In particular, by the difference in pressure between the cathode and the anode of the electrochemical hydrogen pump 16, the electrolyte membrane 4 is pressed above the vent 25F of the first metal sheet 22F, and hence, the electrolyte membrane 4 concavely sags into this vent 25F as shown in Fig. 5.

However, in the electrochemical hydrogen pump 16 of this embodiment, since the maximum diameter of the vents 25F of the first metal sheet 22F is smaller than the maximum diameter of the vents 25S of the second metal sheet 22S, compared to the case in which the relationship between the above two metal sheets is opposite to that described above, the sag of the electrolyte membrane 4 into the vent 25F of the first metal sheet 22F can be suppressed. In addition, in this case, when the size of the vent 25S of the second metal sheet 22S is increased, the gas diffusivity of the second metal sheet 22S can be appropriately secured.

In addition, since the average diameter of the vents 25F of the first metal sheet 22F is smaller than the average diameter of the vents 25S of the second metal sheet 22S, compared to the case in which the relationship between the above two metals sheets is opposite to that described above, the sag of the electrolyte membrane 4 into the vent 25F of the first metal sheet 22F can be suppressed. In addition, in this case, when the size of the vent 25S of the second metal sheet 22S is increased, the gas diffusivity of the second metal sheet 22S can be appropriately secured.

Accordingly, even when the electrolyte membrane 4 is pressed above the vent 25F of the first metal sheet 22F by the difference in pressure between the cathode and the anode of the electrochemical hydrogen pump 16, since suppressed from being bent at the edge portion 25E of this vent 25F, the electrolyte membrane 4 is not likely to be ruptured.

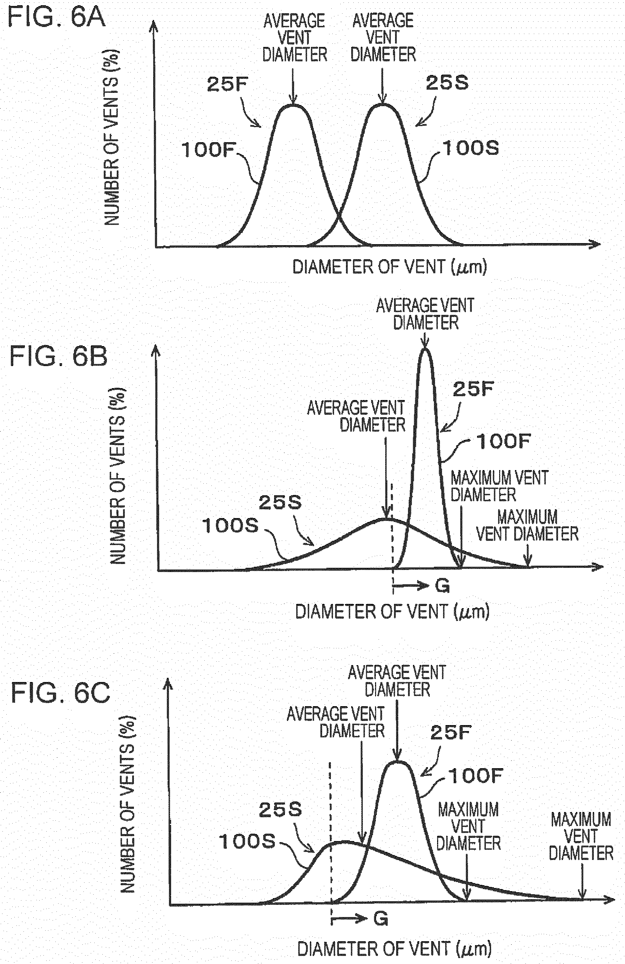

In addition, for example, as shown in Fig. 6A, when a number distribution 100F of the diameters of the vents 25F of the first metal sheet 22F and a number distribution 100S of the diameters of the vents 25S of the second metal sheet 22S are both Gaussian distributions having approximately the same half width, by the comparison between the average diameter of the vents 25F and the average diameter of the vents 25S, the sag amount of the electrolyte membrane 4 into the vent 25F of the first metal sheet 22F and the sag amount of the electrolyte membrane 4 into the vent 25S of the second metal sheet 22S can be appropriately evaluated. In this case, when the average diameter of the vents 25F of the first metal sheet 22F is set smaller than the average diameter of the vents 25S of the second metal sheet 22S, the sag amount of the electrolyte membrane 4 into the vent 25F of the first metal sheet 22F can be reduced.

However, for example, as shown in Fig. 6B, when the half width of the number distribution 100F of the diameters of the vents 25F of the first metal sheet 22F is extremely smaller than the half width of the number distribution 100S of the diameters the vents 25S of the second metal sheet 22S, and the average diameter of the vents 25F of the first metal sheet 22F is larger than the average diameter of the vents 25S of the second metal sheet 22S, by the comparison between the average diameter of the vents 25F and the average diameter of the vents 25S, the sag amount of the electrolyte membrane 4 into the vent 25F of the first metal sheet 22F and the sag amount of the electrolyte membrane 4 into the vent 25S of the second metal sheet 22S may not be appropriately evaluated in some cases.

In the example shown in Fig. 6B, although the average diameter of the vents 25S of the second metal sheet 22S is smaller than the average diameter of the vents 25F of the first metal sheet 22F, in a region G not smaller than the minimum value of the vents 25F of the first metal sheet 22F, the vent 25F of the first metal sheet 22F may reduce the sag amount of the electrolyte membrane 4 as compared to that by the vent 25S of the second metal sheet 22S. In this case, by the comparison between the maximum diameter of the vents 25F of the first metal sheet 22F and the maximum diameter of the vents 25S of the second metal sheet 22S, the sag amount of the electrolyte membrane 4 into the vent 25F and the sag amount of the electrolyte membrane 4 into the vent 25S may be appropriately evaluated as compared to the case evaluated by the comparison between the average diameter of the vents 25F and the average diameter of the vents 25S.

In addition, for example, as shown in Fig. 6C, when the number distribution 100S of the diameters of the vents 25S of the second metal sheet 22S is not Gaussian distribution, the number of vents 25S having a larger diameter is large such that the distribution thereof has a long tail at a right side, and the average diameter of the vents 25F of the first metal sheet 22F is larger than the average diameter of the vents 25S of the second metal sheet 22S, by the comparison between the average diameter of the vents 25F of the first metal sheet 22F and the average diameter of the vents 25S of the second metal sheet 22S, the sag amount of the electrolyte membrane into the vent 25F of the first metal sheet 22F and the sag amount of the electrolyte membrane into the vent 25S of the second metal sheet 22S may not be appropriately evaluated in some cases.

In the example shown in Fig. 6C, although the average diameter of the vents 25S of the second metal sheet 22S is smaller than the average diameter of the vents 25F of the first metal sheet 22F, in a region G not smaller than the minimum diameter of the vents 25F, the vent 25F of the first metal sheet 22F may reduce the sag amount of the electrolyte membrane 4 as compared to that by the vent 25S of the second metal sheet 22S. In this case, by the comparison between the maximum diameter of the vents 25F of the first metal sheet 22F and the maximum diameter of the vents 25S of the second metal sheet 22S, the sag amount of the electrolyte membrane 4 into the vent 25F and the sag amount of the electrolyte membrane 4 into the vent 25S may be appropriately evaluated as compared to the case evaluated by the comparison between the average diameter of the vents 25F and the average diameter of the vents 25S.

In addition, the number distribution 100F of the diameters of the vents 25F of the first metal sheet 22F and the number distribution 100S of the diameters of the vents 25S of the second metal sheet 22S are shown by way of example and are not limited to this example.

(EXAMPLE)

According to an electrochemical hydrogen pump 16 of an example of the first embodiment, in the electrochemical hydrogen pump 16 of the first embodiment, the first metal sheet 22F has a hardness lower than the hardness of the second metal sheet 22S.

As the hardness of the metal sheet 22 is increased, and as the diameter of the vent of the metal sheet 22 is decreased, processing of the vents of the metal sheet 22 becomes difficult. Hence, in the electrochemical hydrogen pump 16 of this embodiment, the hardness of the first metal sheet 22F is decreased as compared to the hardness of the second metal sheet 22S, so that fine processing can be easily performed for the vents 25F of the first metal sheet 22F. In addition, since the hardness of the second metal sheet 22S is increased as compared to the hardness of the first metal sheet 22F, the second metal sheet 22S is formed to have a higher rigidity.

In addition, as a material of the first metal sheet 22F, for example, although aluminum or stainless steel (such as SUS304) may be used, the material is not limited thereto. In addition, as a material of the second metal sheet 22S, for example, although titanium or stainless steel (such as SUS631) may be used, the material is not limited thereto.

Except for the features described above, the electrochemical hydrogen pump 16 of this example may be similar to the electrochemical hydrogen pump 16 of the first embodiment. In addition, the materials of the first metal sheet 22F and the second metal sheet 22S are described by way of example and are not limited to those of this example.

(FIRST MODIFIED EXAMPLE)

According to an electrochemical hydrogen pump 16 of a first modified example of the first embodiment, in the electrochemical hydrogen pump 16 of one of the first embodiment and the example of the first embodiment, one of a pair of primary surfaces of the second metal sheet 22S which is adjacent to the first metal sheet 22F has a roughness higher than the roughness of one of a pair of primary surfaces of the first metal sheet 22F which is adjacent to the anode catalyst layer 3A. In addition, the other primary surface of the first metal sheet 22F which is adjacent to the second metal sheet 22S has a roughness higher than the roughness of the primary surface of the first metal sheet 22F which is adjacent to the anode catalyst layer 3A.

Accordingly, when irregularities are appropriately formed in at least one of the primary surface of the first metal sheet 22F adjacent to the second metal sheet 22S and the primary surface of the second metal sheet 22S adjacent to the first metal sheet 22F, the anode gas may be allowed to diffuse between those primary surfaces. As a result, compared to the case in which the irregularities as described above are not formed, the gas diffusivity of the first metal sheet 22F is improved.

For example, as shown in Fig. 4C, when the first metal sheet 22F and the second metal sheet 22S are laminated to each other, there may be present portions at which the openings of the vents 25F of the first metal sheet 22F and the openings of the vents 25S of the second metal sheet 22S are not overlapped with each other. However, in the electrochemical hydrogen pump 16 of this modified example, even to the vents 25F of the first metal sheet 22F located at the portions at which the openings described above are not overlapped with each other, the anode gas can be supplied through the gap formed by the irregularities described above.

Except for the features described above, the electrochemical hydrogen pump 16 of this modified example may be similar to the electrochemical hydrogen pump 16 of the first embodiment or the example of the first embodiment. In addition, as is the electrochemical hydrogen pump 16 of the example of the first embodiment, when the hardness of the first metal sheet 22F is set lower than the hardness of the second metal sheet 22S, the irregularities are likely to be formed in the primary surface of the first metal sheet 22F as compared to that in the primary surface of the second metal sheet 22S.

(SECOND MODIFIED EXAMPLE)

In a second modified example of the first embodiment, the first metal sheet 22F of the anode gas diffusion layer 2A is a metal sheet formed of a metal powder sintered body, and the second metal sheet 22S is a laminate formed of metal hard plates.

In this case, the maximum diameter of the vents provided in the first metal sheet 22F formed of a metal sintered body is smaller than the maximum diameter of the vents provided in the second metal sheet 22S of the laminate formed of metal hard plates.

In addition, the average diameter of the vents provided in the first metal sheet 22F formed of a metal sintered body is smaller than the average diameter of the vents provided in the second metal sheet 22S of the laminate formed of metal hard plates.

In this modified example, compared to the case in which the first metal sheet is formed of a metal hard plate, in the case in which the first metal sheet is formed of a metal powder sintered body, irregularities (surface roughness) of the surface of the first metal sheet is increased, and the surface area thereof is increased; hence, an area of the first metal sheet in contact with the anode catalyst layer can be further increased. That is, the gas diffusivity to the anode catalyst layer is improved.

(THIRD MODIFIED EXAMPLE)

In a third modified example of the first embodiment, the cathode gas diffusion layer 2C includes a third metal sheet (not shown) which is provided with vents, and the distribution of the average diameters of the vents of the third metal sheet is wider than the distribution of the average diameters of the vents provided in the first metal sheet 22F.

In this modified example, while non-uniformity of stress generated when the third metal sheet is in contact with the cathode catalyst layer is reduced, a compression strain amount to the press force can be reduced by the first metal sheet having a rigidity higher than the rigidity of the third metal sheet, and hence, the increase in reaction overvoltage of the electrochemical reaction can be suppressed.

In addition, in this modified example, the first metal sheet 22F may be formed of a metal powder sintered body, and the third metal sheet may be formed of a metal fiber sintered body. In this case, the distribution of the average diameters of the vents of the third metal sheet can be made wider than the distribution of the average diameters of the vents provided in the first metal sheet 22F.

(FOURTH MODIFIED EXAMPLE)

In a fourth modified example of the first embodiment, the first metal sheet 22F may be formed of a metal mesh, and the second metal sheet 22S may be a laminate formed of metal steel sheets which are provided with vents.

When a metal mesh is used for the first metal sheet, compared to the case in which the vents are provided in a metal steel sheet, the size of the vent can be easily decreased, and the porosity can be easily improved.

Hence, by this modified example, the probability in which a pressed electrolyte membrane is ruptured can be not only reduced, but also the area at which the first metal sheet is in contact with the anode catalyst layer can be increased, so that the gas diffusivity can be improved.

(SECOND EMBODIMENT)

[APPARATUS STRUCTURE]

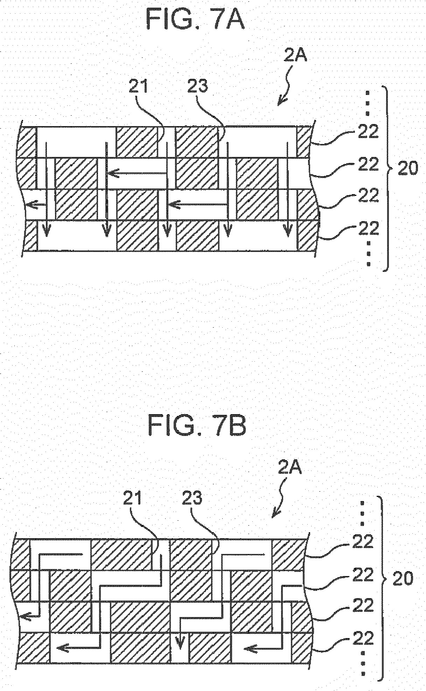

Figs. 7A and 7B are cross-sectional views each showing one example of an anode gas diffusion layer of an electrochemical hydrogen pump of a second embodiment. Figs. 7A and 7B each show a partial cross-section of a laminate 20 of an anode gas diffusion layer 2A. In addition, in a portion of the laminate 20 adjacent to an anode catalyst layer 3A, as described above, although a first metal sheet 22F and a second metal sheet 22S are provided, in Figs. 7A and 7B, the first metal sheet 22F and the second metal sheet 22S are not shown.

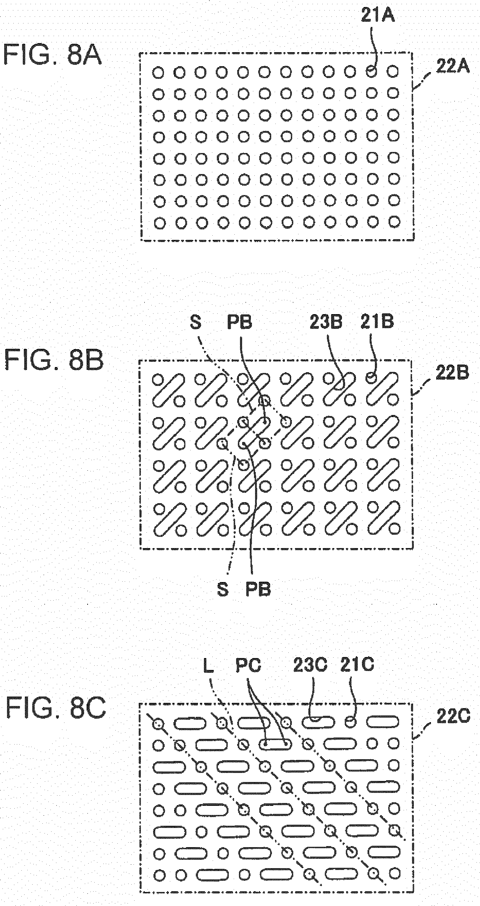

Figs. 8A, 8B, and 8C are plan views each showing one example of a metal sheet of the laminate of the anode gas diffusion layer.

According to an electrochemical hydrogen pump 16 of this embodiment, in the electrochemical hydrogen pump 16 of one of the first embodiment, the example of the first embodiment, and the modified examples of the first embodiment, among the metal sheets 22, at least one metal sheet 22 includes a communication path 23 communicating between through-holes 21.

In particular, as shown in Figs. 7A and 7B, the laminate 20 includes metal sheets 22 each having through-holes 21 through which a gas passes. In addition, among the metal sheets 22 of the laminate 20, at least one metal sheet 22 includes a communication path 23 communicating between through-holes 21.

When the laminate 20 includes the metal sheets 22 each having through-holes 21, and at least one metal sheet 22 thereof includes the communication path 23 communicating between through-holes 21, the laminate 20 may have any structure.

According to the example shown in Fig. 7A, in the laminate 20, the through-holes 21 and pairs of end portions of the communication paths 23 collectively form a gas flow path (hereinafter, referred to as the "standard gas flow path") extending in a direction penetrating the laminate 20, and the communication path 23 forms a gas flow path which is branched from the standard gas flow path and which extends in a direction parallel to a primary surface of the laminate 20 to an adjacent standard gas flow path. Accordingly, the communication path 23 communicates between the through-holes 21 of a metal sheet 22 adjacent to the metal sheet 22 in which the communication path 23 is provided.

In the example shown in Fig. 7B, in a gas flow path extending in a step wise manner (hereinafter, referred to as the "step-wise gas flow path), through-holes 21 each forming a through path which extends in a direction penetrating the laminate 20 and communication paths 23 communicating between the through paths of the step-wise gas flow path are provided in the laminate 20. Accordingly, the communication path 23 communicates between the through-holes 21 of metal sheets 22 each adjacent to the metal sheet 22 in which the communication path 23 is provided.

When the laminate 20 is viewed in plan, for example, as shown in Fig. 8A, in a metal sheet 22A of the laminate 20, through-holes 21A may be formed at regular pitches in a longitudinal direction and a lateral direction to have a matrix shape (lattice shape). The through-hole 21A may have any shape. The through-hole 21A may be, for example, a round hole having a diameter of approximately several tens of micrometers. As a material of the metal sheet 22A, for example, although stainless steel (such as SUS631), titanium, or the like may be used, the material is not limited thereto. In addition, the metal sheet 22A of Fig. 8A does not include the communication path described above.

In addition, as shown in Fig. 8B, in a metal sheet 22B of the laminate 20, through-holes 21B may be formed at regular pitches in a longitudinal direction and a lateral direction. The through-hole 21 B may have any shape. The through-hole 21B may be, for example, a round hole having a diameter of approximately several tens of micrometers. As a material of the metal sheet 22B, for example, although stainless steel (such as SUS631), titanium, or the like may be used, the material is not limited thereto.

In the example shown in Fig. 8B, the through-holes 218 are arranged in a longitudinal direction and a lateral direction so that when the centers of adjacent through-holes 21 B are connected to each other, a rhombus S shown by a two-dot chain line is formed. In this example, a communication path 23B is formed so as to have an opening along an oblique line formed between centers PB of adjacent rhombuses S. In addition, it may be said that the communication path 23B extends in a direction parallel to a first direction in which the through-holes 21 B are connected to each other without intersecting the communication path 23B. In addition, it may also be said that the communication path 23B is formed so as to have an opening along the centers (PB) of straight lines between adjacent through-holes 21 B having a longer distance (between adjacent through-holes 21 B arranged in a longitudinal direction and a lateral direction) among the through-holes 21 B adjacent in a direction different from the first direction. In addition, for example, when the metal sheet 22B and the metal sheet 22A are laminated to each other, the through-holes 21 B and the communication paths 23B are arranged so that the through-holes 21A and the through-holes 21 B are overlapped with each other, and so that the through-holes 21A are overlapped with pairs of end portions of the communication paths 23B. Hence, in this case, the communication path 23B can communicate between the through-holes 21A.

The communication path 23B may have any shape. For example, when the through-hole 21 B is a round hole having a diameter of approximately several tens of micrometers, the communication path 23B may be a slit having a width of approximately several tens of micrometers.

In addition, as shown in Fig. 8C, in a metal sheet 22C of the laminate 20, through-holes 21C may be formed. The through-holes 21C may have any shape. The through-hole 21 C may be, for example, a round hole having a diameter of approximately several tens of micrometers. As a material of the metal sheet 22C, for example, although stainless steel (SUS631), titanium, or the like may be used, the material is not limited thereto.

In the example shown in Fig. 8C, the through-holes 21C are arranged in a longitudinal direction and a lateral direction so that when the centers of adjacent through-holes 21C are connected to each other without intersecting communication paths 23C, an oblique straight line L shown by a two-dot chain line is formed. In this example, the communication path 23C is formed so as to have an opening along a line between two intermediate points PC which are obtained by equally dividing a straight line between adjacent through-holes 21C in a lateral direction into three segments. In addition, for example, when the metal sheet 22A and the metal sheet 22C are laminated to each other, the through-holes 21C and the communication paths 23C are arranged so that the through-holes 21A and the through-holes 21C are overlapped with each other, and so that the through-holes 21 A are also overlapped with pairs of end portions of the communication paths 23C. Hence, in this case, the communication path 23C can communicate between the through-holes 21A.

The communication path 23C may have any shape. For example, when the through-hole 21C is a round hole having a diameter of approximately several tens of micrometers, the communication path 23C may be a slit having a width of approximately several tens of micrometers.

Accordingly, the laminate 20 of the anode gas diffusion layer 2A can allow an anode gas to uniformly diffuse as compared to that in the past. That is, since the laminate 20 includes the communication paths 23, the anode gas passing in the laminate 20 can be supplied not only in one direction but also in an arbitrary direction. As a result, when metal sheets 22 having different arrangement patterns of the communication paths 23 are laminated to form the laminate 20, the direction of an anode gas flow in the laminate 20 can be arbitrarily determined. Hence, the gas diffusivity of the anode gas diffusion layer 2A is improved.

In addition, the combination between the metal sheets 22 having different arrangement patterns of the communication paths 23 is not particularly limited. For example, a metal sheet having a different arrangement pattern from that of the metal sheet 22C may be either a metal sheet in which the position of the communication path 23C is shifted in a lateral direction or the metal sheet 22B.

In addition, for example, in the case in which the anode gas is allowed to flow into the through-hole 21 of the laminate 20 of the anode gas diffusion layer 2A through a gas flow path of a flow path member not shown in the figure, if the laminate 20 does not include the communication path described above, the anode gas is not allowed to flow into the through-hole 21 of the laminate 20 of the anode gas diffusion layer 2A located above a vertical line to a portion at which no gas flow path of the flow path member is provided, and the gas diffusion in the anode gas diffusion layer 2A may be non-uniformed in some cases. However, in the anode gas diffusion layer 2A of the electrochemical hydrogen pump 16 of this embodiment, since the anode gas can be allowed to flow into the through-hole 21 of the laminate 20 of the anode gas diffusion layer 2A as described above through the above communication path 23, the gas diffusion in the anode gas diffusion layer 2A can be suppressed from being non-uniformed.

Accordingly, since the gas diffusivity of the anode gas diffusion layer 2A is improved, the increase in reaction overvoltage of the electrochemical hydrogen pump 16 can be suppressed. That is, an increase in reaction resistance (reaction overvoltage) which occurs when hydrogen in the anode gas is dissociated into a proton and an electron, that is, an increase in consumption electrical power required for hydrogen compression operation of the electrochemical hydrogen pump 16, can be suppressed as compared to that in the past.

In addition, as the number of the communication paths 23 of the metal sheets 22 of the laminate 20 of the anode gas diffusion layer 2A is decreased, the contact area between the metal sheet 22 and the anode catalyst layer 3A is increased. In this case, as shown in Fig. 4A, since the first metal sheet 22F adjacent to the anode catalyst layer 3A includes no communication paths as described above, the contact area between the first metal sheet 22F and the anode catalyst layer 3A is increased as compared to that of the case in which the anode catalyst layer 3A is adjacent to a metal sheet including the communication paths. Hence, the diffusion resistance between the first metal sheet 22F and the anode catalyst layer 3A can be appropriately reduced.

In addition, when the number of the communication paths of the metal sheets 22 of the laminate 20 of the anode gas diffusion layer 2A is increased, the variation in in-plane fluid resistance of this metal sheet 22 tends to increase. For example, when a region in which the number of communication paths is large and a region in which the number of communication paths is small are both present in the surface of the metal sheet 22, since the open area of the communication path 23 is larger than that of the through-hole 21, the fluid resistance in the former region is decreased as compared to that in the latter region. Accordingly, a gas is likely to flow into the former region as compared to that in the latter region. Hence, if a metal sheet 22 having a larger number of communication paths 23 is in contact with the anode catalyst layer 3A, a uniform gas supply over the region from the anode gas diffusion layer 2A to the anode catalyst layer 3A may be disturbed in some cases. However, in the anode gas diffusion layer 2A of the electrochemical hydrogen pump 16 of this embodiment, since the first metal sheet 22F including no communication paths as described above is in contact with the anode catalyst layer 3A, the probability as described above can be reduced.

In addition, except for the features described above, the electrochemical hydrogen pump 16 of this embodiment may be similar to one of the electrochemical hydrogen pumps 16 of the first embodiment, the example of the first embodiment, and the modified examples of the first embodiment.

In addition, the shapes and the dimensions of the through-hole 21 and the communication path 23 are described by way of example and are not limited to those of this example.

(FIRST EXAMPLE)

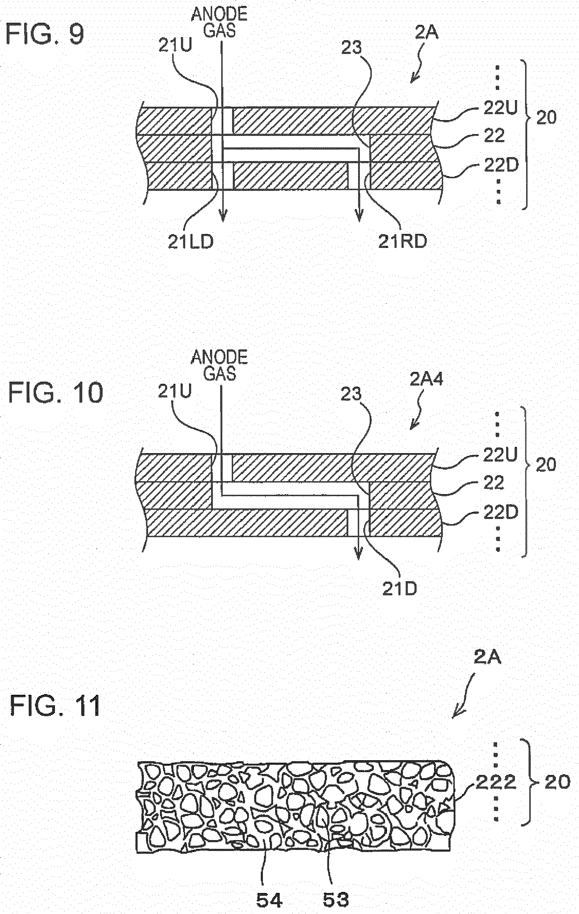

Fig. 9 is a cross-sectional view showing one example of an anode gas diffusion layer of an electrochemical hydrogen pump of a first example of the second embodiment. In Fig. 9, a partial cross-section of a laminate 20 of an anode gas diffusion layer 2A is shown. In addition, in a portion of the laminate 20 adjacent to an anode catalyst layer 3A, as described above, a first metal sheet 22F and a second metal sheet 22S are provided; however, in Fig. 9, the first metal sheet 22F and the second metal sheet 22S are not shown.

According to an electrochemical hydrogen pump 16 of this example, in the electrochemical hydrogen pump 16 of the second embodiment, the communication path 23 communicates between a through-hole 21 LD and a through-hole 21 RD provided in the same metal sheet 22D adjacent to the metal sheet 22 in which the communication path 23 is provided. That is, the communication path 23 communicates between the left-side through-hole 21 LD and the right-side through-hole 21 RD present in the same metal sheet 22D located under the metal sheet 22 in which the communication path 23 is provided. In addition, the through-hole 21 LD and the through-hole 21 RD are shifted from each other by the length of the communication path 23 in a direction parallel to the primary surface of the laminate 20.

In addition, as shown in Fig. 9, a metal sheet 22U provided on the metal sheet 22 in which the communication path 23 is provided may include a through-hole 21 U located right above the through-hole 21 LD. In this case, the communication path 23 communicates between the through-hole 21 U and the through-hole 21 RD. In addition, the metal sheet 22U located on the metal sheet 22 in which the communication path 23 is provided may include a through-hole (not shown) located right above the through-hole 21 RD. In this case, the communication path 23 communicates between the through-hole located right above as described above and the through-hole 21 Ld.

Since the laminate 20 of the anode gas diffusion layer 2A includes the communication path 23 described above, an anode gas passing in the laminate 20 can be supplied not only in a direction penetrating the laminate 20 but also in a direction parallel to the primary surface of the laminate 20. Hence, the gas diffusivity of the anode gas diffusion layer 2A is improved.

Except for the features described above, the electrochemical hydrogen pump 16 of this example may be similar to the electrochemical hydrogen pump 16 of the second embodiment.

(SECOND EXAMPLE)

Fig. 10 is a cross-sectional view showing one example of an anode gas diffusion layer of an electrochemical hydrogen pump of a second example of the second embodiment. In Fig. 10, a partial cross-section of a laminate 20 of an anode gas diffusion layer 2A is shown. In addition, in a portion of the laminate 20 adjacent to an anode catalyst layer 3A, as described above, although a first metal sheet 22F and a second metal sheet 22S are provided, in Fig. 10, the first metal sheet 22F and the second metal sheet 22S are not shown.

According to an electrochemical hydrogen pump 16 of this example, in the electrochemical hydrogen pump 16 of one of the second embodiment and the first example of the second embodiment, the communication path 23 communicates between a through-hole 21 U and a through-hole 21 D provided, respectively, in a metal sheet 22U and a metal sheet 22D different therefrom, each of which is adjacent to the metal sheet 22 in which the communication path 23 is provided. That is, the communication path 23 communicates between the through-hole 21 U of the metal sheet 22U located on the metal sheet 22 in which the communication path 23 is provided and the through-hole 21 D of the metal sheet 22D located under the metal sheet 22 described above. In addition, the through-hole 21 U and the through-hole 21 D are shifted from each other by the length of the communication path 23 in a direction parallel to the primary surface of the laminate 20.

Since the laminate 20 of the anode gas diffusion layer 2A includes the communication path 23, a gas passing in the laminate 20 can be supplied not only in a direction penetrating the laminate 20 but also in a direction parallel to the primary surface of the laminate 20. Hence, the gas diffusivity of the anode gas diffusion layer 2A is improved.

Except for the features described above, the electrochemical hydrogen pump 16 of this example may be similar to the electrochemical hydrogen pump 16 of one of the second embodiment and the first example of the second embodiment.

(MODIFIED EXAMPLE)

Fig. 11 is a cross-sectional view showing one example of an anode gas diffusion layer of an electrochemical hydrogen pump of a modified example of the second embodiment. Fig. 11 shows a partial cross-section of a laminate 20 of an anode gas diffusion layer 2A. In addition, in a portion of the laminate 20 adjacent to an anode catalyst layer 3A, as described above, although a first metal sheet 22F and a second metal sheet 22S are proved, in Fig. 11, the first metal sheet 22F and the second metal sheet 22S are not shown.

According to an electrochemical hydrogen pump 16 of this modified example, in the electrochemical hydrogen pump 16 one of the first aspect, the second aspect, the example of the first embodiment, the second embodiment, and the first and the second examples of the second embodiment, the laminate 20 of the anode gas diffusion layer 2A includes metal sheets 222 each formed of a metal sintered body which allows a gas to diffuse.

The metal sheet 222 formed of a metal sintered body is obtained, for example, by sintering a metal powder and has a porous structure formed of a skeleton portion 54 and void portions 53. The void portions 53 are spaces each having a diameter of approximately several tens of micrometers (such as approximately 50 $\mu$m) and communicate with each other. Accordingly, when passing through the metal sheet 222 in a thickness direction thereof, an anode gas is allowed to diffuse. In addition, the metal sheet 222 has a smooth surface by a surface treatment.

Accordingly, in the electrochemical hydrogen pump 16 of this modified example, since the laminate 20 of the anode gas diffusion layer 2A includes the metal sheets 222 each formed of a metal sintered body, compared to the case in which the laminate 20 is formed of metal steel sheets which are provided with vents and has no metal sheet formed of a metal sintered body, the gas permeability and the gas diffusivity required for the anode gas diffusion layer 2A can be easily secured.

Except for the features described above, the electrochemical hydrogen pump 16 of this modified example may be similar to the electrochemical hydrogen pump 16 of one of the first embodiment, the example of the first embodiment, the first to the fourth modified examples of the first embodiment, the second embodiment, and the first and the second examples of the second embodiment.

In addition, as long as not conflicted with each other, the first embodiment, the example of the first embodiment, the first to the fourth modified examples of the first embodiment, the second embodiment, the first and the second examples of the second embodiment, and the modified example of the second embodiment may be performed in combination.

In addition, from the above description, it is apparent to a person skilled in the art that many improvements of the present disclosure and other embodiments thereof are to be performed. Hence, it is to be understood that the above description has been described by way of example in order to suggest the best mode of carrying out the present disclosure to a person skilled in the art. In addition, the structures and/or the functions disclosed in detail in the present disclosure can be substantially modified and/or changed without departing from the sprit and the scope thereof.

One aspect of the present disclosure may be used for an electrochemical hydrogen pump which is able to reduce the probability in which an electrolyte membrane pressed to an anode gas diffusion layer by the difference in pressure between a cathode and an anode is ruptured as compared to that in the past.

**Claims**

1. An electrochemical hydrogen pump comprising:

   an electrolyte membrane having a pair of primary surfaces;
   a cathode catalyst layer provided on one primary surface of the electrolyte membrane;
   an anode catalyst layer provided on the other primary surface of the electrolyte membrane;
   a cathode gas diffusion layer provided on the cathode catalyst layer;
   an anode gas diffusion layer provided on the anode catalyst layer; and
   a voltage application device applying a voltage between the cathode catalyst layer and the anode catalyst layer,
   wherein the anode gas diffusion layer includes a laminate formed of metal sheets which are provided with vents,
   and among the metal sheets, the maximum diameter of vents provided in a first metal sheet adjacent to the
   anode catalyst layer is smaller than the maximum diameter of vents provided in a second metal sheet adjacent
   to the first metal sheet.

2. An electrochemical hydrogen pump comprising:

   an electrolyte membrane having a pair of primary surfaces;
   a cathode catalyst layer provided on one primary surface of the electrolyte membrane;
   an anode catalyst layer provided on the other primary surface of the electrolyte membrane;
   a cathode gas diffusion layer provided on the cathode catalyst layer;
   an anode gas diffusion layer provided on the anode catalyst layer; and
   a voltage application device applying a voltage between the cathode catalyst layer and the anode catalyst layer,
   wherein the anode gas diffusion layer includes a laminate formed of metal sheets which are provided with vents,
   and among the metal sheets, the average diameter of vents provided in a first metal sheet adjacent to the anode
   catalyst layer is smaller than the average diameter of vents provided in a second metal sheet adjacent to the
   first metal sheet.

3. The electrochemical hydrogen pump according to Claim 1,
   wherein, of the anode gas diffusion layer and the cathode gas diffusion layer, the anode gas diffusion layer only
   includes the laminate formed of metal sheets which are provided with vents, and among the metal sheets, the
   maximum diameter of the vents provided in the first metal sheet adjacent to the anode catalyst layer is smaller than
   the maximum diameter of the vents provided in the second metal sheet adjacent to the first metal sheet.

4. The electrochemical hydrogen pump according to Claim 2,
   wherein, of the anode gas diffusion layer and the cathode gas diffusion layer, the anode gas diffusion layer only
   includes the laminate formed of metal sheets which are provided with vents, and among the metal sheets, the
   average diameter of the vents provided in the first metal sheet adjacent to the anode catalyst layer is smaller than
   the average diameter of the vents provided in the second metal sheet adjacent to the first metal sheet.

5. The electrochemical hydrogen pump according to Claim 1 or Claim 2,
   wherein the number of the vents per unit surface area of a primary surface of the first metal sheet is larger than the
   number of the vents per unit surface area of a primary surface of the second metal sheet.

6. The electrochemical hydrogen pump according to Claim 1 or Claim 2,
   wherein an open area of the vents of the first metal sheet is equivalent to or more than an open area of the vents
   of the second metal sheet.

7. The electrochemical hydrogen pump according to Claim 1 or Claim 2,
   wherein the first metal sheet has a hardness lower than the hardness of the second metal sheet.

8. The electrochemical hydrogen pump according to Claim 1 or Claim 2,
   wherein one of a pair of primary surfaces of the second metal sheet which is adjacent to the first metal sheet has
   a roughness higher than the roughness of one of a pair of primary surfaces of the first metal sheet which is adjacent
   to the anode catalyst layer.

9. The electrochemical hydrogen pump according to Claim 1 or Claim 2,
   wherein one of a pair of primary surfaces of the first metal sheet which is adjacent to the second metal sheet has a roughness higher than the roughness of the other primary surface of the first metal sheet which is adjacent to the anode catalyst layer.

10. The electrochemical hydrogen pump according to Claim 1 or Claim 2,
wherein the laminate includes a metal sheet formed of a metal sintered body through which a gas is allowed to diffuse.

11. The electrochemical hydrogen pump according to Claim 1 or Claim 2,
wherein the first metal sheet is formed of a metal sintered body, and the second metal sheet is a laminate formed of metal steel sheets which are provided with vents.

12. The electrochemical hydrogen pump according to Claim 1 or Claim 2,
wherein the cathode gas diffusion layer includes a third metal sheet which is provided with vents, and the distribution of average diameters of the vents of the third metal sheet is wider than the distribution of average diameters of the vents of the first metal sheet.

13. The electrochemical hydrogen pump according to Claim 12,
wherein the first metal sheet is formed of a metal powder sintered body, and the third metal sheet is formed of a metal fiber sintered body.

14. The electrochemical hydrogen pump according to Claim 1 or Claim 2,
wherein the first metal sheet is formed of a metal mesh, and the second metal sheet is a laminate formed of metal steel sheets which are provided with vents.

# FIG. 1

125E

DIFFERENCE IN PRESSURE

104

102A

125

# FIG. 2

16

10

9

12

7 CATHODE GAS

1C

14C

2C

3C

4

3A

2A

8

13

14A

1A

11

15

ANODE GAS

# FIG. 3

2A

100    50

22F, 22
22S, 22
22
22

20

FIG. 4A

22F

25F

FIG. 4B

22S

25S

FIG. 4C

22F, 22S

25S

25F

FIG. 5

25E

DIFFERENCE IN
PRESSURE

3C
4
3A
22F, 22
22S, 22
20
25S
25F

FIG. 6A

AVERAGE
VENT
DIAMETER

AVERAGE
VENT
DIAMETER

NUMBER OF VENTS (%)

25F

25S

100F

100S

DIAMETER OF VENT (μm)

FIG. 6B

AVERAGE VENT
DIAMETER

NUMBER OF VENTS (%)

AVERAGE VENT
DIAMETER

25F

100F

MAXIMUM VENT
DIAMETER

MAXIMUM
VENT DIAMETER

25S

100S

G

DIAMETER OF VENT (μm)

FIG. 6C

AVERAGE VENT
DIAMETER

AVERAGE VENT
DIAMETER

NUMBER OF VENTS (%)

25F

100F

MAXIMUM
VENT
DIAMETER

MAXIMUM
VENT
DIAMETER

25S

100S

G

DIAMETER OF VENT (μm)

FIG. 7A

FIG. 7B

FIG. 8A

21A

22A

FIG. 8B

S    PB         23B   21B

22B

S   PB

FIG. 8C

L    PC    23C   21C

22C

FIG. 9

ANODE GAS

21U  23  2A

21U

22U
22  } 20
22D

21LD  21RD

FIG. 10

ANODE GAS

21U  23  2A4

22U
22  } 20
22D

21D

FIG. 11

2A

222 } 20

54  53

# FIG. 12

# FIG. 13

Europäisches
Patentamt

European
Patent Office

Office européen
des brevets

**EUROPEAN SEARCH REPORT**

Application Number

EP 17 20 6862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/337366 A1 (BLANCHET SCOTT [US] ET AL) 19 December 2013 (2013-12-19) | 1-12 | INV.<br>C25B11/03<br>B01D53/32 |
| Y | * claims 1, 4, 6-9, 12, 14, 16-20 *<br>* paragraphs [0002], [0005], [0009], [0029], [0030], [0036] - [0040], [0047], [0049], [0058] - [0060] * | 13,14 | C01B3/50<br>C25B1/02 |
| X | US 2015/064606 A1 (DEKEMPENEER ERIK [BE] ET AL) 5 March 2015 (2015-03-05) | 1-6,10, 11 | ADD.<br>H01M8/0662 |
| Y | * claims 15, 18-21, 27, 29 *<br>* paragraphs [0001], [0026], [0027], [0032] - [0037], [0070], [0071], [0076] - [0078] * | 7-9, 12-14 | |
| X | US 2016/049677 A1 (MÜLLER ULRICH [DE]) 18 February 2016 (2016-02-18) | 1-6,10, 11 | |
| Y | * claims 1-5 *<br>* figures 1, 2, 4-6 *<br>* paragraphs [0001], [0041] - [0043], [0049] * | 7-9, 12-14 | |
| X | JP S62 227097 A (AGENCY IND SCIENCE TECHN) 6 October 1987 (1987-10-06) | 1-6,10, 11 | TECHNICAL FIELDS SEARCHED (IPC)<br>C25B |
| Y | * claim 1 *<br>* paragraphs [0001], [0003] *<br>* figures 1, 2 * | 7-9, 12-14 | B01D<br>C01B<br>H01M |
| E | EP 3 258 524 A1 (PANASONIC IP MAN CO LTD [JP]) 20 December 2017 (2017-12-20)<br>* claims 1, 2, 10, 11 *<br>* figures 1-8 *<br>* paragraphs [0032] - [0100] * | 1-6 | |
| Y | US 6 361 896 B1 (EBERLE KLAUS [DE] ET AL) 26 March 2002 (2002-03-26)<br>* claims 1, 2, 4 *<br>* column 2, lines 50-64 * | 1-14 | |

-/--

The present search report has been drawn up for all claims

| Place of search | Date of completion of the search | Examiner |
|---|---|---|
| Munich | 27 March 2018 | Perednis, Dainius |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 17 20 6862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2010/040926 A1 (BLANCHET SCOTT C [US] ET AL) 18 February 2010 (2010-02-18)<br>* claims 1-4, 6, 9-11, 15, 18-20 *<br>* figures 1-3 *<br>* paragraphs [0023], [0027] - [0029], [0031] *<br>----- | 1-14 | |
| | | | TECHNICAL FIELDS SEARCHED (IPC) |

The present search report has been drawn up for all claims

| Place of search | Date of completion of the search | Examiner |
|---|---|---|
| Munich | 27 March 2018 | Perednis, Dainius |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 6862

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2018

| Patent document cited in search report | | | Publication date | Patent family member(s) | | | Publication date |
|---|---|---|---|---|---|---|---|
| US 2013337366 | A1 | | 19-12-2013 | BR | 112014031304 | A2 | 27-06-2017 |
| | | | | CA | 2875821 | A1 | 19-12-2013 |
| | | | | CN | 104704664 | A | 10-06-2015 |
| | | | | EP | 2862221 | A1 | 22-04-2015 |
| | | | | JP | 2015526840 | A | 10-09-2015 |
| | | | | KR | 20150020675 | A | 26-02-2015 |
| | | | | US | 2013337366 | A1 | 19-12-2013 |
| | | | | WO | 2013188568 | A1 | 19-12-2013 |
| US 2015064606 | A1 | | 05-03-2015 | CN | 104204302 | A | 10-12-2014 |
| | | | | EP | 2831312 | A1 | 04-02-2015 |
| | | | | JP | 2015520294 | A | 16-07-2015 |
| | | | | US | 2015064606 | A1 | 05-03-2015 |
| | | | | WO | 2013143833 | A1 | 03-10-2013 |
| US 2016049677 | A1 | | 18-02-2016 | CA | 2898533 | A1 | 14-02-2016 |
| | | | | EP | 2985096 | A1 | 17-02-2016 |
| | | | | US | 2016049677 | A1 | 18-02-2016 |
| JP S62227097 | A | | 06-10-1987 | JP | H0232357 | B2 | 19-07-1990 |
| | | | | JP | S62227097 | A | 06-10-1987 |
| EP 3258524 | A1 | | 20-12-2017 | EP | 3258524 | A1 | 20-12-2017 |
| | | | | JP | 2017226911 | A | 28-12-2017 |
| | | | | US | 2017362718 | A1 | 21-12-2017 |
| US 6361896 | B1 | | 26-03-2002 | DE | 19615562 | C1 | 09-10-1997 |
| | | | | EP | 0958629 | A1 | 24-11-1999 |
| | | | | JP | 3910642 | B2 | 25-04-2007 |
| | | | | JP | 2001502105 | A | 13-02-2001 |
| | | | | US | 6361896 | B1 | 26-03-2002 |
| | | | | WO | 9740542 | A1 | 30-10-1997 |
| US 2010040926 | A1 | | 18-02-2010 | US | 2010040926 | A1 | 18-02-2010 |
| | | | | US | 2016126578 | A1 | 05-05-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4733380 B

- JP 2000058073 A